# EUROPEAN PATENT SPECIFICATION

(11) **EP 4 608 637 B1**
(45) Date of publication and mention of the grant of the patent: **16.09.2026**
(21) Application number: 23817135.9
(22) Date of filing: 01.12.2023
(51) Int. Cl.: B29C 70/38, B29D 99/00, B29B 11/16

(54) **LAYUP SYSTEM**
AUFLEGESYSTEM
SYSTÈME DE DRAPAGE

(30) Priority: 23.12.2022 EP 22216382
(43) Date of publication of application: 03.09.2025
(73) Proprietor: Siemens Gamesa Renewable Energy A/S, 7330 Brande (DK)
(72) Inventor: VESTERAA, Morten, 9700 Brønderslev (DK)
(74) Representative: SGRE-Association
(86) International application number: PCT/EP2023/083888
(87) International publication number: WO 2024/132458

(56) References cited:
- DE-A1- 102012 219 267
- US-A1- 2007 187 026

## Description

### Background

Fibre-reinforced composites are used to manufacture various kinds of objects, for example aircraft parts, boat hulls, wind turbine rotor blades, etc. A manufacturing procedure generally comprises arranging layers of fibre material in a mould, closing the mould, and infusing resin through the material layers. After curing, the part is released from the mould. The structural strength of the object depends to some extent on the type of fibre material used, and on the manner in which the layers of fibre material are built up. In a complex object such as a wind turbine rotor blade, the position and length of each material piece to be laid into the mould can be specified in a layup plan, and workers arrange the material pieces in the mould according to the specified sequence. However, manual layup of a large wind turbine rotor blade can be very time-consuming and can require a team of several workers to complete the layup. For example, the mould for a 100 m rotor blade can have a width reaching 6 m, requiring two or more workers to handle a long sheet so that it can be positioned correctly in the mould. Furthermore, it can be difficult to manipulate such a long sheet into place while arranging it at a required offset to the preceding sheet. Another problem with the known manual layup techniques is the difficulty in avoiding wrinkles or folds in a sheet when it is draped into a wide section of the mould. Since wrinkles or folds can compromise the quality of the cured part, it is of critical importance to avoid these when arranging a sheet in the mould. A semi-automated approach is described in DE102012219267A1, which proposes a layup station with a framework tooling structure that supports a number of tools such as a roller tool, an adhesive application tool, and a pressing tool. The roller tool can be deployed to unroll pre-cut sheets of fabric material in a longitudinal direction into the mould.

US2007187026 discloses layup system for performing fibre material layup in a mould comprising an assembly comprising a movable gantry adapted to hold a robotic arm above the mould adapted to be loaded with a roll of fibre material.

It is therefore an object of the invention to provide a more efficient way of performing layup in a mould.

This object is achieved by the claimed layup system for performing fibre material layup in a mould and by the claimed method of performing a layup procedure.

### Description

According to the invention, the layup system for performing layup in a mould comprises a robotic arm assembly that includes a robotic arm and a holding arrangement that is adapted to suspend the robotic arm above the mould; and at least one detachable end-effector of a first type, adapted to carry a rolled sheet of fibre material, i.e. a sheet of fibre material that has been wound on a roll. The layup system further comprises a control arrangement configured to load a first type end-effector with such a roll of fibre material. The control arrangement is further configured to actuate the robotic arm to attach to a loaded first-type end-effector, and to unroll fibre material from that first-type end-effector into the mould. The robotic arm can perform this sequence of steps until the layup procedure has been completed.

Currently available industrial robotic arms or "serial manipulators" are powerful and fast devices, which can be very precisely controlled to carry out any manner of task. A serial manipulator can comprise a chain of links connected by joints, motors to actuate the joints, and an end-effector or "hand" that is held by the last link in the chain. Usually, the end-effector of a robotic arm is designed to perform a specific task. In the context of the invention, an end-effector of the first type is constructed to carry one or more lengths of fibre material in the form of a roll. The loaded end-effector then lays the fibre material in the mould by unrolling it. In the following, an end-effector of a first type may be referred to as a "first task end-effector".

The inventive layup system can be used with any mould and any fibre material. In the following, without restricting the invention in any way, it may be assumed that the mould is a wind turbine rotor blade mould. It may also be assumed that the fibre material is glass fibre, for example woven rovings, stitched lengthwise rovings, chopped strand mats, etc. Of course, carbon fibre may be used in lieu of glass fibre as appropriate, for example to improve the structural strength of the moulded part in a specific region.

It shall be understood that, in addition to the robotic arm, the control arrangement (or simply "controller" in the following) can actuate various other elements of the layup system as will be explained below.

According to the invention, the method of performing a layup procedure comprises the steps of providing an instance of the inventive layup system; controlling components of the layup system to load a first type end-effector; and actuating the robotic arm to attach to a loaded first type end-effector and to transfer fibre material from the end-effector into the mould. These steps can be performed repeatedly until the layup is complete.

An advantage of the invention is that fibre material can be arranged in a mould in a favourably fast manner. Particularly in the case of a large mould, the robotic arm and its end-effector can drape sections or lengths of fibre material quickly and precisely. This means that the layup can be completed much more rapidly compared to a largely manual procedure. As a result, the cycle time of the mould is favourably short, and the throughput of the moulding facility can be increased.

Particularly advantageous embodiments and features of the invention are given by the dependent claims, as revealed in the following description. Features of different claim categories may be combined as appropriate to give further embodiments not described herein.

The expressions "robot arm", "robotic arm" and "serial manipulator" shall be understood to be synonyms and may be used interchangeably herein. The robotic arm of the inventive layup system preferably has at least six degrees of freedom, i.e. six links connected by joints that can be independently actuated by the controller.

In a preferred embodiment of the invention, the holding arrangement is adapted to move the robotic arm assembly in a transverse direction relative to the mould in response to a command from the controller. In other words, the holding arrangement displaces the robotic arm assembly "width-wise" relative to the mould, i.e. the first-task end-effector can be used to drape a length of glass fibre material, in a controlled fashion, from one side of a mould to the other.

After laying a number of sheets in the mould, the holding arrangement can be displaced by an appropriate amount in a lengthwise direction relative to the mould. However, in a particularly preferred embodiment of the invention, the layup system comprises a longitudinal displacement means that moves the robotic arm assembly in a lengthwise direction in response to a command from the controller.

The holding means for the robotic arm assembly and the longitudinal displacement means can be realised in as a single structure. For example, in a particularly preferred embodiment of the invention, the layup system can comprise a gantry that is large enough to fit about the mould, and high enough to provide sufficient clearance for the robotic arm assembly at any point along the mould. In the conventional sense, a gantry comprises two uprights or vertical supports, and a horizontal connector or bridge extending between the upper ends of the vertical supports. The uprights can be realised to move along parallel tracks so that the entire gantry can be displaced back and forth in the lengthwise direction along the mould. In the inventive layup system, such tracks can be arranged on either side of a wind turbine rotor blade mould, for example. Alternatively, the uprights can be mounted on an arrangement of rollers or wheels which roll along the floor of the manufacturing facility. In this way, the entire gantry can be moved or displaced in a direction parallel to a longitudinal axis of the mould.

In a particularly preferred embodiment of the invention, the gantry includes a vertically movable transverse structure extending between the uprights, and the robotic arm assembly is suspended from this transverse structure. The transverse structure shall be understood to extend horizontally between the uprights, and to comprise a vertical displacement means so that it can be moved up and down as required. The uppermost displacement of the transverse structure may be some distance below the gantry bridge. The vertical displacement means of the transverse structure allows the robotic arm to be raised or lowered in order to adjust for differences in height along the length of the mould.

The robotic arm can be dimensioned to reach each side of the mould. However, for a wide mould, the robotic arm would require correspondingly long links, and could be unfavourably large as a result. Therefore, in a particularly preferred embodiment of the invention, the holding arrangement is constructed to include a displacement means that enables the holding arrangement to travel from side to side along the transverse structure. For example, the holding arrangement can be realised as a trolley with motor-driven rollers or wheels, and can be actuated by the controller.

The layup system preferably comprises a material depot or "kitting station" that is adapted to hold a number of fibre material supply rolls, and a loading apparatus that can unroll a length of material from a supply roll onto a first-type end-effector or "kitting roll". A supply roll can comprise a very long sheet of fibre material that can be cut to length as required. To this end, the layup system preferably comprises a cutting apparatus that can cut each sheet to a predetermined length. Preferably, the material depot is arranged on the transverse structure, so that the robotic arm can easily access a loaded kitting roll waiting in the material depot.

As explained above, the robotic arm can "unroll" the glass fibre material from a loaded first-task end-effector, draping the glass fibre material into the mould. When this first task is complete, the robotic arm can be actuated to present the empty first-task end-effector to the kitting station, and the control arrangement actuates relevant components of the kitting station to reload the first-task end-effector with fibre material, while still attached to the robot.

However, it may take some time to load a first-task end-effector with one or more sheets of fibre material, particularly when layup is being done in the wide regions of a rotor blade mould. Therefore, in a preferred embodiment of the invention, the layup system is configured to allow the layup procedure to be carried out essentially without interruption. To this end, the layup system preferably comprises at least two first-type end-effectors. The robotic arm can immediately replace an empty first-task end-effector by a loaded first-task end-effector and continue the layup procedure. While fibre material is being unrolled or unloaded from one first-task end-effector, another is being prepared with the next load of fibre material. To this end, the controller is preferably configured to actuate the robotic arm to attach to a loaded end-effector, to unroll fibre material from the end-effector into the mould, and to detach from the unloaded end-effector. The robotic arm can perform this sequence of steps until the layup procedure has been completed.

In such an embodiment, the robotic arm is adapted to detach itself from an empty end-effector and to attach to a loaded first-type end-effector, preferably with minimal delay in between these steps and preferably without the need for manual assistance. To this end, the inventive layup system preferably comprises an exchange tool adapted to receive an empty first-type end-effector detached from the robotic arm, and to present a loaded first-type end-effector to the robotic arm.

The required side-to-side length of a glass fibre sheet or mat will depend on the spanwise position of that sheet in the mould. In an integral or closed-mould process, a sheet of fibre material for layup in the root end of a rotor blade mould may be cut to a length that exceeds the circumference of the root end. A sheet of fibre material for layup near the tip end will be considerably shorter. To this end, the control arrangement preferably receives a layup plan that specifies the position and length of each material piece to be laid into the mould, and actuates the relevant elements of the layup system according to the layup plan.

An advantage of the invention is that the first end-effector is not limited to carrying a single sheet of fibre material, but can be used to drape two or more sheets simultaneously into the mould. Adjacent layup sheets are preferably offset by a certain amount. Therefore, the inventive method preferably comprises a step of arranging the supply rolls in the material depot in such a way that adjacent supply rolls are offset by the desired amount. The first-type end-effector can then be loaded with sheets from two or more supply rolls. For example, the loading apparatus can attach the free ends of four supply rolls to an empty end-effector, and can transfer a length of material from each of the four supply rolls simultaneously onto the end-effector, forming a roll of four sheets while maintaining the desired offset between the long edges of consecutive sheets. After completing the rolling procedure, the cutting apparatus then cuts the sheets as appropriate, and the loaded end-effector can then be retrieved by the robotic arm. The controller then actuates the robotic arm to move the end-effector to the appropriate side of the mould, where it positions the free ends of the sheets at the edge of the mould. The robotic arm then unrolls the four sheets simultaneously into the mould. By laying multiple sheets simultaneously and accurately into the mould, the inventive approach can decrease the layup time by a significant amount.

The control arrangement of the inventive layup system can comprise a single control module adapted to issue control commands to each component of the layup system. Alternatively, two or more components of the layup system can comprise their own control modules, and these are preferably adapted to communicate with each other. For example, the kitting station and the robotic arm can operate essentially independently of each other.

As indicated above, a wind turbine rotor blade can be manufactured by moulding two halves separately, and then joining the cured halves along their outer edges. Alternatively, a wind turbine rotor blade can be manufactured by preparing the layup in a half-mould, completing the upper layup over a mandrel placed on the lower layup, and then placing the corresponding half-mould over the upper layup. In this "integral" approach, the half-moulds are connected and sealed, so that resin infusion can be performed on the complete rotor blade layup. In an integral mould procedure, the first-task end-effector type is used to drape fibre material sheets into a lower half-mould to build up the lower layup, and may therefore be referred to as a lower-layup end-effector.

The inventive layup system is particularly suited to a closed mould or integral mould procedure. For example, a length of fibre material can be cut to include a lower layup portion and also an upper layup portion. As explained above, the robotic arm is actuated to unroll the lower layup portion from a lower-layup end-effector into the lower mould. In a further preferred embodiment of the invention, a sheet of fibre material loaded onto the end-effector includes a first portion for the lower layup and also a further portion for the upper layup. After draping the first portion into the mould, the robotic arm is controlled to arrange the second portion or "upper-layup portion" to one side of the mould, i.e. to "park" it on the outside until required.

When the lower layup is completed, a mandrel is placed into the mould, and the method proceeds by actuating the robotic arm to attach to an end-effector of a second type or "upper-layup end-effector". This upper-layup end-effector can comprise one or more clamps that can be actuated to grasp the free end of a sheet previously "parked" at the side of the mould. The robotic arm is then actuated to drape the upper layup portion over the mandrel, and the upper-layup end-effector is then opened to detach from the sheet. These steps are completed until each upper-layup portion has been draped over the mandrel.

When the upper layup is complete, an upper half-mould can be put into place, and the mould halves are connected in preparation for the resin infusion and curing stages.

In an exemplary scenario, the inventive method is used to complete the layup for a large wind turbine rotor blade as follows: the gantry is positioned at one end of a rotor blade half-mould, for example at the root end. Several supply rolls are arranged in the material depot, according to a desired offset between sheets of the layup. The controller then commences to actuate the loading apparatus and the cutting apparatus to load a lower-layup end-effector; to actuate the robotic arm to retrieve a loaded end-effector; to unload fibre material from the lower-layup end-effector into the mould; to exchange the empty end-effector by a loaded one. As the layup progresses, the controller displaces the gantry in the X-direction towards the far end of the mould. The mould length can be in the order of 100 m or more, with a maximum width in the order of 6 meters or more m. To account for the increasing width of the rotor blade mould, the controller actuates the horizontal displacement means as appropriate to move the robotic arm from side to side. A height difference of the mould can be in the order of 5 m or more, and the controller can actuate the transverse structure in the Z-direction to move it up or down as required. The above dimensions are only exemplary, and can be expected to increase as wind turbine rotor blades become increasingly longer.

This choreography of steps can be achieved by a computer program product comprising a computer program that is directly loadable into a memory of the control arrangement, and which comprises program elements for controlling elements of the layup system during the inventive method when the computer program is executed by the controller. The necessary displacements in the X, Y, and Z axes can be derived from a layup plan and/or can be pre-programmed. Alternatively or in addition, displacement of the gantry, transverse structure and trolley can be done "on the fly" by an operator using a remote control interface.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 is a simplified perspective view of an embodiment of the inventive layup system 1;
Figures 2 - 4 show exemplary stages in an embodiment of the inventive layup procedure;
Figure 5 shows a plan view of a material depot in an embodiment of the inventive layup system;
Figures 6 - 9 illustrate stages of an end-effector exchange procedure;
Figure 10 shows an exemplary sequence of steps in the inventive layup method;
Figure 11 shows a stage in a prior art layup procedure.

In the diagrams, like numbers refer to like objects throughout. Objects in the diagrams are not necessarily drawn to scale.

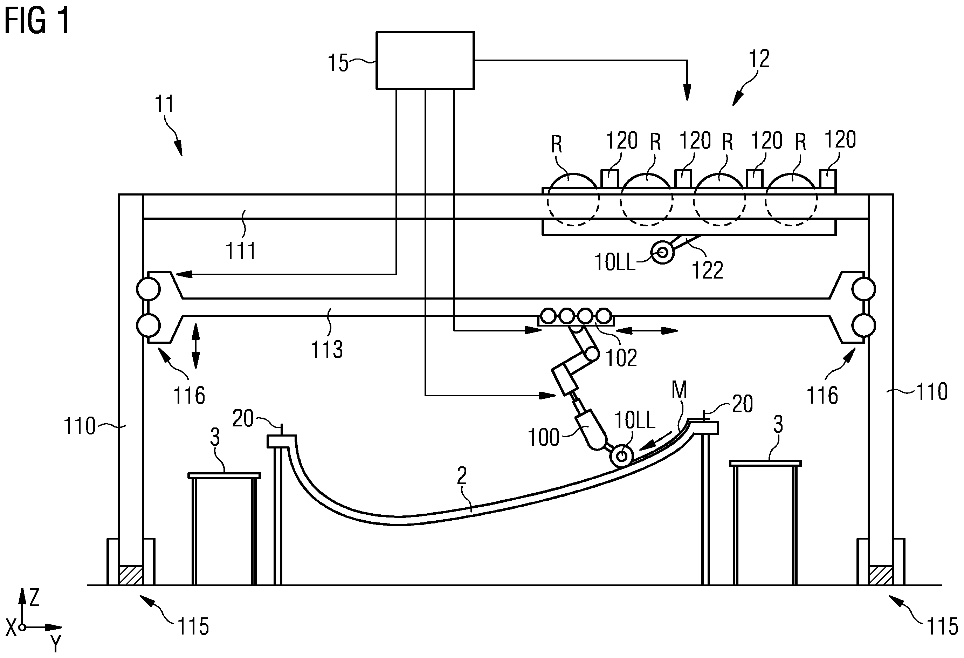

Figure 1 is a simplified perspective view of the inventive layup system 1. The diagram includes a partial view of a wind turbine rotor blade mould 2, indicating its width in an airfoil section and also indicating the semi-circular shape at the root end. The rotor blade mould 2 can have a length in the order of 100 m, and a root end diameter in the order of 5 m. Platforms 3 or walkways are also shown, for personnel access.

The inventive layup system 1 includes a gantry 11 which comprises supporting columns 110 on either side of a connector or bridge 111. The entire gantry 11 can move in the X-direction of a Cartesian coordinate system (indicated in the lower right corner of the diagram), for example using an arrangement 115 of tracks and/or rollers.

A robotic arm assembly 10 of the layup system 1 comprises a robotic arm 100 and several end-effectors, of which a kitting roll 10LL or lower layup end-effector 10LL is shown in the diagram.

A transverse structure 113 extends between the supporting columns 110 and can be raised or lowered in the Z-direction, using a suitable vertical displacement means 116 such as an arrangement of hydraulic actuators and/or motor driven actuators. The transverse structure 113 supports a trolley 102 from which the robot arm 100 is suspended. The trolley 102 is realised to move from side-to-side, i.e. in the Y-direction, for example by means of motor-driven actuators. In this exemplary embodiment, the serial manipulator has six links (i.e. six degrees of freedom) and the end-effector 10LL is realised to unroll fibre material M into the mould 2.

In this embodiment, the bridge 111 supports a material depot 12 or "kitting station" in which a supply of fibre material - in this case four fibre material rolls - is held in readiness for transfer to a first type end-effector 10LL or "kitting roll". A handing means, indicated for simplicity as a unit 120 on one side of each supply roll 4 in the kitting station 12, comprises a loading apparatus for securing the free end of the fibre material sheet of its roll R to a lower-layup end-effector 10LL and a cutting apparatus for cutting the sheet when the end-effector loading step is complete. The diagram also indicates an end-effector exchange device 122 that can present a loaded kitting roll 10LL (as indicated) to the robotic arm 100, and which can also receive an empty kitting roll from the robotic arm.

A control arrangement 15 (which may comprise several control modules, shown here collectively as a single module) is configured to control movement of the gantry 11, the transverse structure 113 and the trolley 102, to bring the serial manipulator 100 into any desired position in 3D space, etc. The controller 15 is further configured to control actuators of the handing means 120 to load a kitting roll 10LL with fibre material, and to control the robot arm 100 and the kitting roll 10LL to unload the fibre material M into the mould 2.

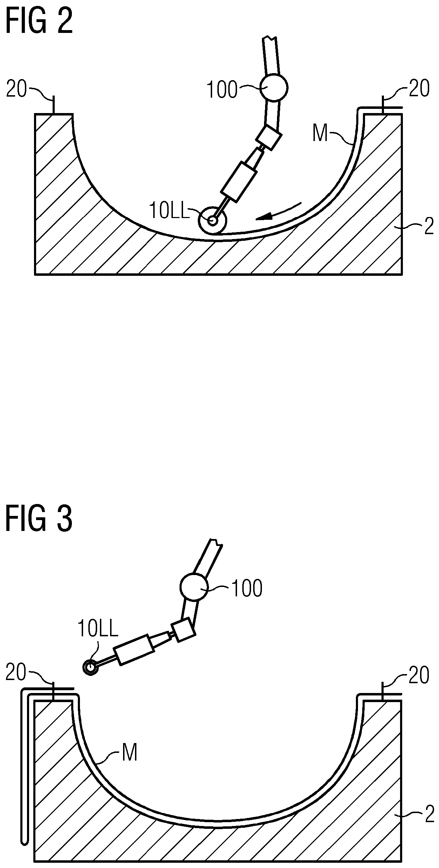

Figures 2 and 3 show stages in an exemplary embodiment of the inventive layup procedure, in which a half-mould is prepared with layers of glass fibre material prior to a step of placing a mandrel in the half-mould. In Figure 2, the robot arm 100 is unrolling a sheet M of glass fibre material into the root end of the half-mould 2. Initially, the robot arm 100 is controlled so that the kitting roll 10LL arranges the first end of the sheet M in place over fixation spikes 20 along the edge of the mould 2. The serial manipulator 100 is then moved towards the other side of the mould 2, while the kitting roll 10LL unrolls the sheet M to drape it in the half-mould 2. At the far side of the half-mould 2, as indicated in Figure 3, the robot arm 100 and the kitting roll 10LL are controlled to drape the remainder of the sheet M over the side of the mould 2 and to "park" the end of the sheet M onto fixation spikes 20. Using the inventive layup system 1, the amount of manual labour can be reduced by 50% or more. Another advantage of the inventive layup system is that the cycle time for a mould can be reduced by 20% - 30% or even more.

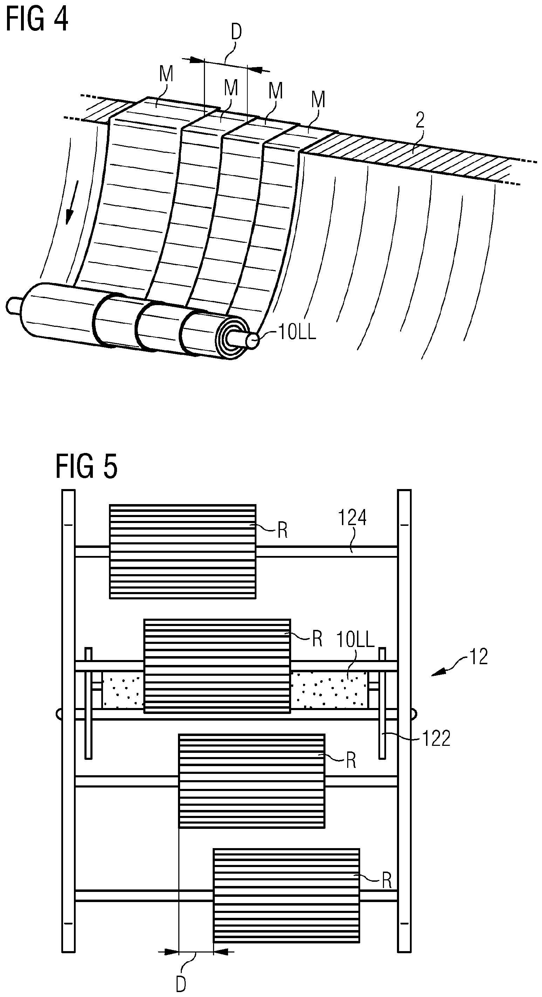

Figure 4 shows a further exemplary stage of the inventive layup procedure. Here, the end-effector 10LL is simultaneously unrolling several sheets M of glass fibre material into the mould 2. In this exemplary embodiment, the end-effector 10LL has been loaded with four fibreglass sheets M with specific offsets D between them. As the robotic arm 100 is moved from one side of the mould 2 to the other, the four sheets M are draped, with the desired sheet offsets D, in the mould 2. This stage of the layup procedure can therefore be carried out about four times faster than a "single-sheet" approach described in Figure 3. With several parallel sheets being laid simultaneously, the time savings compared to manual draping are even more significant.

Figure 5 shows an exemplary kitting station 12 from above. Here, the kitting station 12 is equipped to load a lower-layup end-effector with a roll of four sheets at predetermined offsets D. To this end, the kitting station 12 receives four rolls R of glass fibre material. Each roll R is carried on a rod 124. The rolls R have been loaded onto the rods 124 according to the predetermined offset D. The rolls R are then lifted by crane and lowered into the kitting station 12. Of course, the offsets between adjacent rolls can be different, according to the layup plan. Similarly, the supply rolls R can carry different types or grades of fibre material, according to the layup plan. The diagram also indicates an empty lower-layup end-effector 10LL in place on the exchange tool 122.

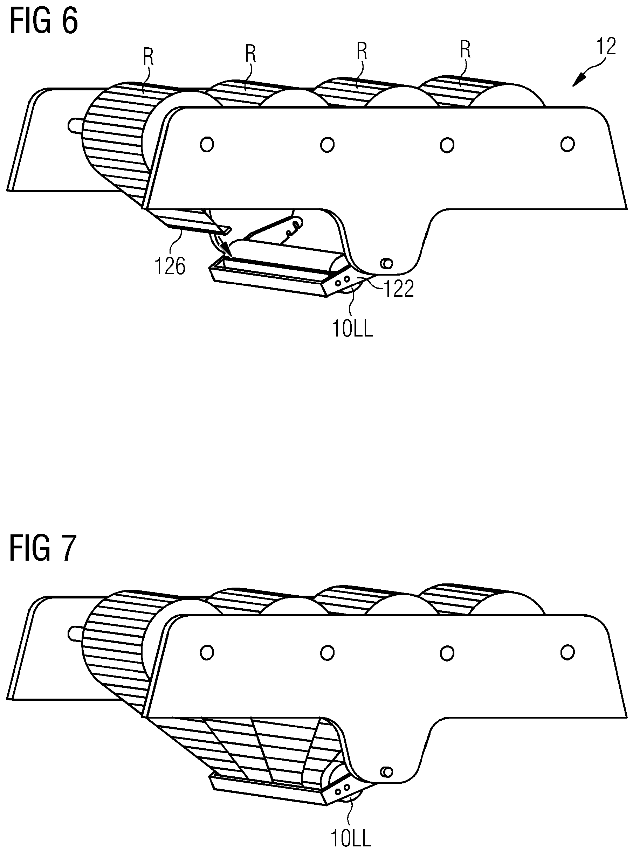

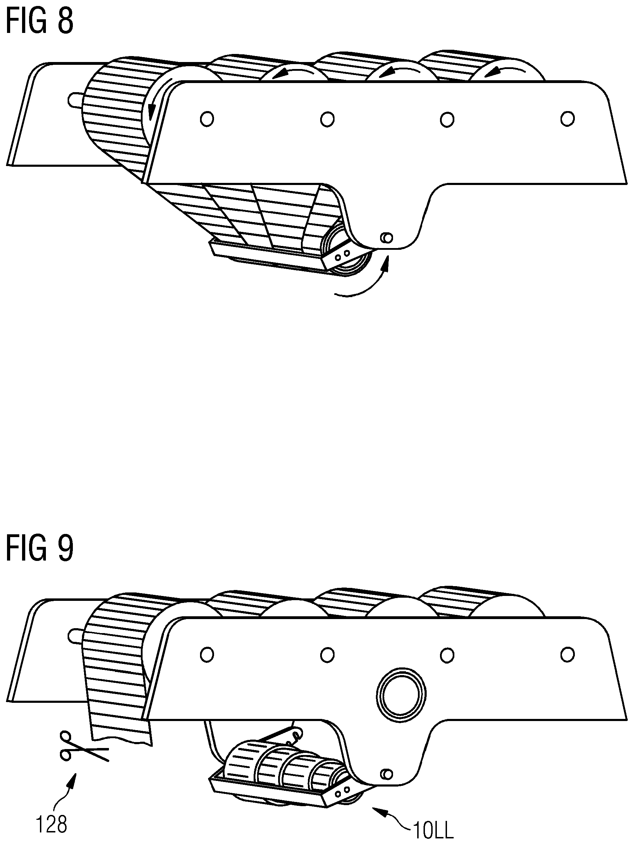

Figures 6 - 9 illustrate stages of a kitting roll exchange procedure. In a first stage as shown in Figure 6, a kitting roll 10LL is placed into an exchange tool 122 of the kitting station 12. Then, the free ends of the four rolls R are secured to the kitting roll 10LL as indicated in Figure 7. The controller 15 then actuates a winding tool (for example a gear motor) which turns the kitting roll 10LL, thus winding the sheets from the four rolls R onto the kitting roll 10LL as indicated in Figure 8. The controller 15 halts the winding tool when the required length of material has been loaded onto the kitting roll 10LL, and actuates a cutting tool, indicated schematically in the diagram, to sever the sheets from the supply rolls R. Finally, as shown in Figure 9, the controller 15 actuates the serial manipulator 100 to retrieve the loaded kitting roll 10LL from the kitting station 12. This retrieval step can be preceded by a step of returning an empty kitting roll 10LL as explained above.

Of course, the kitting station 12 can be realised with greater functionality than indicated in the simplified drawings of Figures 6 - 9. For example, each kitting roll can be provided in a cassette adapted to perform various tasks. The entire cassette, with a supply roll R loaded onto a rod 124, can be lifted into the kitting station 12. When the supply roll has been used up, the cassette is lifted out of the kitting station 12 and replaced by a full cassette. Each cassette can be equipped with a gripper tool 124 adapted to grasp the free end of the sheet and secure it to an empty upper-layup end-effector. The gripper tools 124 of several cassettes (e.g. four cassettes of the exemplary embodiment described above) can operate concurrently to secure the ends of four sheets to an empty upper-layup end-effector 10LL. Each cassette can be equipped with a cutting tool 128 adapted to cut across the width of the sheet. Once the end-effector is loaded with the required amount, the sheets are severed by the cassette cutting tools 128. In an exemplary realisation, a cutting tool 128 can comprise a motor-driven rotary blade on one side of the sheet and a flat cutting surface on the other side of the sheet. A spring-loaded mechanism can provide the necessary force between blade and cutting surface. As indicated above, a control module can actuate the various components of the kitting station 12 to load an empty lower-layup end-effector 10LL while the robotic arm 100 is busy unrolling fibre material from another lower-layup end-effector 10LL.

While the inventive procedure has been described with a kitting station equipped to receive four rolls of fibre material and to load an upper-layup end-effector with sheets from these four rolls, it shall be understood that the kitting station can be constructed to handle any number of fibre material rolls, and the end-effector can be dimensioned accordingly. Furthermore, depending on the layup plan, the controller may actuate the relevant components to load an end-effector with only one sheet. It is also conceivable that more than one kitting station can be deployed by the inventive layup system.

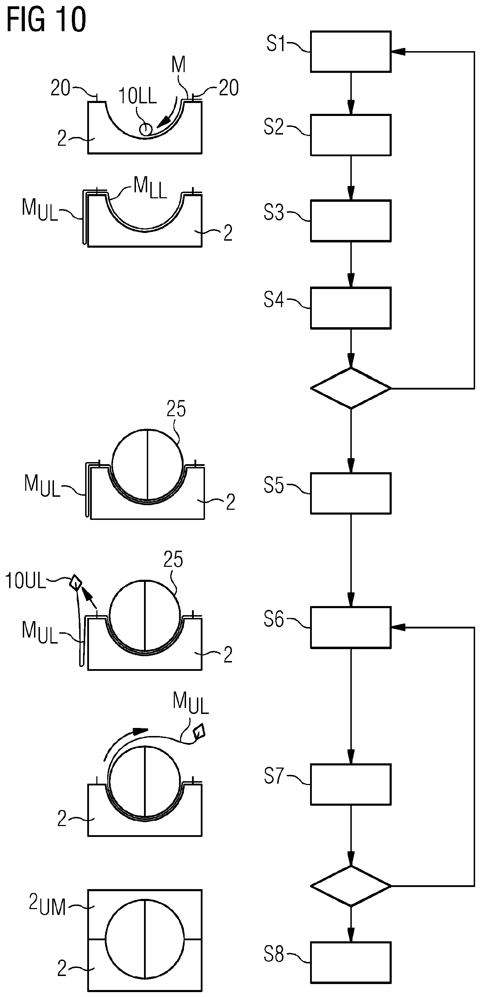

Figure 10 shows an exemplary sequence of steps in the inventive layup method. The diagrams show a cross-section taken in the root region of a wind turbine rotor blade mould 2 as the robot arm 100 drapes one or more fibreglass sheets M into the mould 2.

In step S1, the robot arm 100 fetches a loaded kitting roll 10LL from the kitting station.

In step S2, the robot arm 100 drapes the sheet M in the mould 2, whereby the first end of the sheet M is held by spikes 20 on one side of the mould 2, and the kitting roll 10LL is then moved towards the other side of the mould 2, following the interior curvature of the mould 2 as it unrolls the sheet M.

In step S3, the robot arm 100 is manipulated to arrange an upper layup portion M_{UL} of the sheet M on the other side of the mould 2, allowing it to hang down, and "parks" the end of the sheet M onto spikes 20 on the left-hand side of the mould 2. The spikes 20 ensure that the draped sheet is held securely and will not slide down into the mould 2.

In step S4, the robot arm 100 then places the now empty kitting roll 10LL in the exchange tool of the kitting station and attaches to a fully loaded kitting roll 10LL waiting in the exchange tool.

These steps S1 - S4 are repeated until the lower-mould layup is complete. While steps S2 - S3 are being performed, the kitting station loads an empty kitting roll with sheets of material and places the loaded kitting roll in the exchange tool.

When the lower layup is complete, a mandrel 25 is placed onto the layup in the half-mould 2 in step S5. In step S6, the robot arm 100 is controlled to attach to an upper-layup end-effector 10UL, which is actuated to grasp the "parked" end of a sheet M. In step S7, the robot arm 100 is controlled to drape the upper layup section over the mandrel 25 and the upper-layup end-effector 10UL is actuated to release the sheet M. These steps S6 - S7 are repeated until the upper layup is complete. For a long rotor blade mould, the entire layup procedure in stages S1 - S7 can be completed within a favourably short time while requiring only about half the manpower of a comparable prior art procedure. Finally, an upper half-mould 2_{UM} is placed over the upper layup in step S8 in preparation for a vacuum-assisted resin transfer procedure.

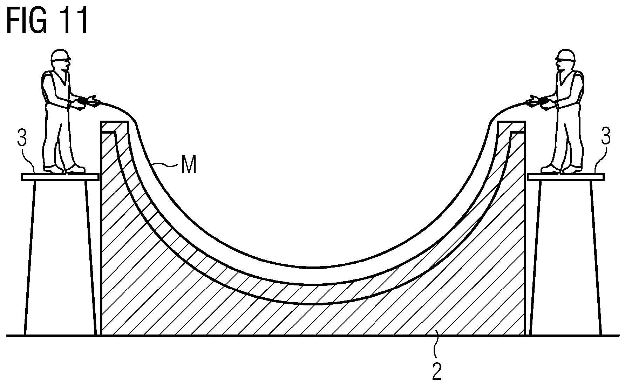

Figure 11 shows a stage in a prior art layup procedure. Here, sheets of glass fibre material are being laid manually in a wind turbine rotor blade mould 2. At the wider sections of a long rotor blade of the type shown in the above diagrams, two or more people may be needed to drape a single sheet M correctly into place. Generally, using only manual labour, it requires more manpower and takes significantly longer to complete the layup of a long rotor blade mould, i.e. in this prior art method, personnel costs are higher and the mould cycle time is longer compared to the inventive method. Although the present invention has been disclosed in the form of preferred embodiments and variations thereon, it will be understood that numerous additional modifications and variations could be made thereto without departing from the scope of the invention as defined in the appended claims. For example, instead of using a gantry that moves along the ground as described above, the robotic arm could be supported by a ceiling-mounted structure that is adapted to move in the longitudinal direction of the mould, and which can raise or lower the robotic arm to adjust for differences in height along the length of the mould. Such a ceiling-mounted structure could also support the kitting station. Alternatively, the longitudinal displacement means of the inventive layup system could be realized as a "half-gantry" arranged to utilize the floor and one wall of a manufacturing facility. Such a half-gantry can comprise a single upright that moves along the floor, and a horizontal connector or bridge that extends from the top of the upright to a track arranged on the wall on the other side of the mould.

For the sake of clarity, it is to be understood that the use of "a" or "an" throughout this application does not exclude a plurality, and "comprising" does not exclude other steps or elements.

## Claims

1. A layup system (1) for performing fibre material layup in a mould (2), comprising
- a robotic arm assembly (10) comprising a holding arrangement (102) adapted to hold the robotic arm (100) above the mould (2);
- at least one detachable end-effector (10LL) of a first type, adapted to be loaded with a roll (R) of fibre material (M); and **characterized by**
- a controller (15) configured to actuate the robotic arm (100) to attach to an end-effector (10LL) of the first type and to unroll fibre material (M) from a loaded first-type end-effector (10LL) into the mould (2).

2. A layup system according to the preceding claim, wherein the holding arrangement (102) is adapted to move the robotic arm assembly (10) in a transverse direction (Y) relative to the mould (2) in response to a command from the controller (15).

3. A layup system according to any of the preceding claims, comprising a longitudinal displacement means (115) adapted to displace the robotic arm assembly (10) in a lengthwise direction (X) relative to the mould (2) in response to a command from the controller (15).

4. A layup system according to any of the preceding claims, comprising a gantry (11) with a vertically movable transverse structure (113) extending between uprights (110) of the gantry (11), and wherein the holding arrangement (102) is arranged on the transverse structure (113).

5. A layup system according to any of the preceding claims, comprising a material depot (12) adapted to hold a number of fibre material supply rolls (R).

6. A layup system according to the preceding claim, comprising a loading apparatus (126) adapted to load one or more sheets (M) of fibre material from the material depot (12) onto an end-effector (10LL) of the first type.

7. A layup system according to any of the preceding claims, comprising a cutting apparatus (128) adapted to cut each fibre material sheet (M) to a predetermined length.

8. A layup system according to any of the preceding claims, comprising an exchange tool (122) adapted to receive an empty end-effector (10LL) of the first type from the robotic arm (100) and to present a loaded end-effector (10LL) to the robotic arm (100).

9. A method of performing a layup procedure in a mould (2), preferably a wind turbine rotor blade mould (2), which method comprises the steps of
- providing a layup system (1) according to any of claims 1 to 8;
- actuating the robotic arm (100) of the layup system (1) to:
S1) attach to an end-effector (10LL) of the first type and
S2) transfer fibre material (M) from a loaded first-type end-effector (10LL) into the mould (2).

10. A method according to the preceding claim, comprising a step of placing a fibre material supply roll (R) in the material depot (12) at a predetermined offset (D) to an adjacent fibre material supply roll (R).

11. A method according to any of claims 9 to 10, comprising a step of simultaneously rolling a plurality of fibre material sheets (M) onto an end-effector (10LL), wherein each sheet (M) is unrolled from a supply roll (R) of the material depot (12).

12. A method according to any of claims 9 to 11, wherein a fibre material sheet (M) includes a lower-layup portion (M_{LL}) and an upper-layup portion (M_{UL}).

13. A method according to claim 12, comprising a step of S3) actuating the robotic arm (100) to arrange the upper-layup portion (M_{UL}) to one side of the mould (2).

14. A method according to claim 13, comprising a step of S5) placing a mandrel (25) into the mould (2).

15. A method according to claim 14, comprising steps of actuating the robotic arm (100) to attach to an end-effector (10UL) of a second type; and repeatedly
S6) actuating the end-effector (10UL) to grasp the free end of an upper layup portion (M_{UL}); and
S7) actuating the robotic arm (100) to arrange the upper layup portion (M_{UL}) over the mandrel (25).

## Patentansprüche

1. Auflegesystem (1) zum Durchführen eines Fasermaterialauflegers in einer Form (2), umfassend
- eine Roboterarmbaugruppe (10), umfassend eine Halteanordnung (102), die dazu ausgelegt ist, den Roboterarm (100) über der Form (2) zu halten;
- mindestens einen abnehmbaren Endeffektor (10LL) einer ersten Art, der dazu ausgelegt ist, mit einer Rolle (R) aus Fasermaterial (M) beladen zu werden; und **dadurch gekennzeichnet, dass**
- eine Steuerung (15), die dazu konfiguriert ist, den Roboterarm (100) zu betätigen, um an einem Endeffektor (10LL) der ersten Art angebracht zu werden und Fasermaterial (M) von einem beladenen Endeffektor (10LL) der ersten Art in die Form (2) abzurollen.

2. Auflegesystem nach dem vorhergehenden Anspruch, wobei die Halteanordnung (102) dazu ausgelegt ist, die Roboterarmbaugruppe (10) als Reaktion auf einen Befehl von der Steuerung (15) in einer Querrichtung (Y) relativ zu der Form (2) zu bewegen.

3. Auflegesystem nach einem der vorhergehenden Ansprüche, umfassend ein Längsverschiebungsmittel (115), das dazu ausgelegt ist, die Roboterarmbaugruppe (10) als Reaktion auf einen Befehl von der Steuerung (15) in einer Längsrichtung (X) relativ zu der Form (2) zu verschieben.

4. Auflegesystem nach einem der vorhergehenden Ansprüche, umfassend eine Brücke (11) mit einer vertikal beweglichen Querstruktur (113), die sich zwischen Stützen (110) der Brücke (11) erstreckt, und wobei die Halteanordnung (102) an der Querstruktur (113) angeordnet ist.

5. Auflegesystem nach einem der vorhergehenden Ansprüche, umfassend ein Materialdepot (12), das dazu ausgelegt ist, eine Anzahl von Fasermaterialversorgungsrollen (R) zu halten.

6. Auflegesystem nach dem vorhergehenden Anspruch, umfassend eine Ladevorrichtung (126), die dazu ausgelegt ist, eine oder mehrere Bahnen (M) aus Fasermaterial von dem Materialdepot (12) auf einen Endeffektor (10LL) der ersten Art zu laden.

7. Auflegesystem nach einem der vorhergehenden Ansprüche, umfassend eine Schneidvorrichtung (128), die dazu ausgelegt ist, jede Fasermaterialbahn (M) auf eine vorbestimmte Länge zu schneiden.

8. Auflegesystem nach einem der vorhergehenden Ansprüche, umfassend ein Austauschwerkzeug (122), das dazu ausgelegt ist, einen leeren Endeffektor (10LL) der ersten Art von dem Roboterarm (100) aufzunehmen und dem Roboterarm (100) einen beladenen Endeffektor (10LL) zu präsentieren.

9. Verfahren zum Durchführen eines Auflegevorgangs in einer Form (2), bevorzugt einer Rotorblattform (2) einer Windkraftanlage, wobei das Verfahren die folgenden Schritte umfasst:
- Bereitstellen eines Auflegesystems (1) nach einem der Ansprüche 1 bis 8;
- Betätigen des Roboterarms (100) des Auflegesystems (1) zu Folgendem:
S1) Anbringen an einem Endeffektor (10LL) der ersten Art und
S2) Übertragen von Fasermaterial (M) von einem beladenen Endeffektor (10LL) der ersten Art in die Form (2).

10. Verfahren nach dem vorhergehenden Anspruch, umfassend einen Schritt des Platzierens einer Fasermaterialversorgungsrolle (R) in dem Materialdepot (12) in einem vorbestimmten Versatz (D) zu einer benachbarten Fasermaterialversorgungsrolle (R).

11. Verfahren nach einem der Ansprüche 9 bis 10, umfassend einen Schritt des gleichzeitigen Rollens einer Vielzahl von Fasermaterialien (M) auf einen Endeffektor (10LL), wobei jede Bahn (M) von einer Versorgungsrolle (R) des Materialdepots (12) abgerollt wird.

12. Verfahren nach einem der Ansprüche 9 bis 11, wobei eine Fasermaterialbahn (M) einen unteren Auflegeabschnitt (M_{LL}) und einen oberen Auflegeabschnitt (M_{UL}) beinhaltet.

13. Verfahren nach Anspruch 12, umfassend einen folgenden Schritt:
S3) Betätigen des Roboterarms (100), um den oberen Auflegeabschnitt (M_{UL}) auf einer Seite der Form (2) anzuordnen.

14. Verfahren nach Anspruch 13, umfassend einen folgenden Schritt:
S5) Platzieren eines Dorns (25) in die Form (2).

15. Verfahren nach Anspruch 14, umfassend Schritte des Betätigens des Roboterarms (100), um an einem Endeffektor (10UL) einer zweiten Art angebracht zu werden; und wiederholt
S6) Betätigen des Endeffektors (10UL), um das freie Ende eines oberen Auflegeabschnitts (M_{UL}) zu greifen; und
S7) Betätigen des Roboterarms (100), um den oberen Auflegeabschnitt (M_{UL}) über dem Dorn (25) anzuordnen.

## Revendications

1. Système de superposition (1) pour réaliser une superposition de matériau fibreux dans un moule (2), comprenant :
- un ensemble de bras robotique (10) comprenant un agencement de maintien (102) adapté pour maintenir le bras robotique (100) au-dessus du moule (2) ;
- au moins un organe effecteur terminal amovible (10LL) d'un premier type, adapté pour être chargé avec un rouleau (R) de matériau fibreux (M) ; et **caractérisé par**
- un dispositif de commande (15) configuré pour actionner le bras robotique (100) afin de se fixer à un organe effecteur terminal (10LL) du premier type et de dérouler du matériau fibreux (M) à partir d'un organe effecteur terminal du premier type chargé (10LL) dans le moule (2).

2. Système de superposition selon la revendication précédente, dans lequel l'agencement de maintien (102) est adapté pour déplacer l'ensemble de bras robotique (10) dans une direction transversale (Y) par rapport au moule (2) en réponse à une commande provenant du dispositif de commande (15).

3. Système de superposition selon l'une quelconque des revendications précédentes, comprenant un moyen de déplacement longitudinal (115) adapté pour déplacer l'ensemble de bras robotique (10) dans une direction longitudinale (X) par rapport au moule (2) en réponse à une commande provenant du dispositif de commande (15).

4. Système de superposition selon l'une quelconque des revendications précédentes, comprenant un portique (11) avec une structure transversale mobile verticalement (113) s'étendant entre des montants (110) du portique (11), et dans lequel l'agencement de maintien (102) est agencé sur la structure transversale (113).

5. Système de superposition selon l'une quelconque des revendications précédentes, comprenant un dépôt de matériau (12) adapté pour contenir un certain nombre de rouleaux d'alimentation en matériau fibreux (R).

6. Système de superposition selon la revendication précédente, comprenant un appareil de chargement (126) adapté pour charger une ou plusieurs feuilles (M) de matériau fibreux provenant du dépôt de matériau (12) sur un organe effecteur terminal (10LL) du premier type.

7. Système de superposition selon l'une quelconque des revendications précédentes, comprenant un appareil de coupe (128) adapté pour couper chaque feuille de matériau fibreux (M) à une longueur prédéterminée.

8. Système de superposition selon l'une quelconque des revendications précédentes, comprenant un outil d'échange (122) adapté pour recevoir un organe effecteur terminal (10LL) vide du premier type provenant du bras robotique (100) et pour présenter un organe effecteur terminal (10LL) chargé au bras robotique (100).

9. Procédé pour réaliser une procédure de superposition dans un moule (2), de préférence un moule de pale de rotor d'éolienne (2), lequel procédé comprend les étapes consistant à :
- fournir un système de superposition (1) selon l'une quelconque des revendications 1 à 8 ;
- actionner le bras robotique (100) du système de superposition (1) pour :
S1) se fixer à un organe effecteur terminal (10LL) du premier type et
S2) transférer du matériau fibreux (M) provenant d'un organe effecteur terminal du premier type chargé (10LL) dans le moule (2).

10. Procédé selon la revendication précédente, comprenant une étape consistant à placer un rouleau d'alimentation en matériau fibreux (R) dans le dépôt de matériau (12) à un décalage prédéterminé (D) par rapport à un rouleau d'alimentation en matériau fibreux (R) adjacent.

11. Procédé selon l'une quelconque des revendications 9 à 10, comprenant une étape consistant à enrouler simultanément une pluralité de feuilles de matériau fibreux (M) sur un organe effecteur terminal (10LL), dans lequel chaque feuille (M) est déroulée à partir d'un rouleau d'alimentation (R) provenant du dépôt de matériau (12).

12. Procédé selon l'une quelconque des revendications 9 à 11, dans lequel une feuille de matériau fibreux (M) inclut une partie de superposition inférieure (M_{LL}) et une partie de superposition supérieure (M_{UL}) .

13. Procédé selon la revendication 12, comprenant une étape consistant à :
S3) actionner le bras robotique (100) pour agencer la partie de superposition supérieure (M_{UL}) sur un côté du moule (2).

14. Procédé selon la revendication 13, comprenant une étape consistant à
S5) placer un mandrin (25) dans le moule (2).

15. Procédé selon la revendication 14, comprenant les étapes consistant à actionner le bras robotique (100) pour se fixer à un organe effecteur terminal (10UL) d'un second type ; et de manière répétée :
S6) actionner l'organe effecteur terminal (10UL) pour saisir l'extrémité libre d'une partie de superposition supérieure (M_{UL}) ; et
S7) actionner le bras robotique (100) pour agencer la partie de superposition supérieure (M_{UL}) au-dessus du mandrin (25) .
